# EUROPEAN PATENT SPECIFICATION

(11) **EP 1 714 836 B1**
(45) Date of publication and mention of the grant of the patent: **01.10.2008**
(21) Application number: 06005670.2
(22) Date of filing: 20.03.2006
(51) Int. Cl.: B60R 21/0132

(54) **Passenger protection apparatus**
Insassenschutzvorrichtung
Appareil de protection d'un passager

(30) Priority: 22.03.2005 JP 2005081351
(43) Date of publication of application: 25.10.2006
(73) Proprietor: Calsonic Kansei Corporation, Tokyo (JP)
(72) Inventor: Sawahata, Toshikatsu, Nakano-ku Tokyo (JP)
(74) Representative: Grünecker, Kinkeldey, Stockmair & Schwanhäusser Anwaltssozietät

(56) References cited:
- EP-A- 1 312 515
- DE-A1- 10 025 260

## Description

The present invention relates to a passenger protection apparatus according to the preamble of independent claim 1.
Such a protection apparatus can be taken from the prior art document DE 10025260 A1. Said rollover detection means is provided with a gyrosensor which generates a signal proportional to the angular velocity along the longitudinal axis in combination with further sensors detecting acceleration in vertical direction and transverse direction. In order to detect any failure within the apparatus, said prior art document teaches a plausibility test on basis of the signal of said sensors to prevent any operation in case the combination of the sensor signals cannot be associated to a possible condition of the vehicle. Accordingly, at least three sensor signals are taken and checked with regards to the kinematic model of the vehicle to decide whether the combination of the respective signals is theoretically possible or if the combination of the values would refer to impossible conditions so that at least one of the sensor signals is incorrect.

Conventionally, there has been known a passenger protection apparatus, which determines vehicle rollover by a determination whether or not a rollover angular speed produced during vehicle rollover and a rollover angle obtained from the rollover angular speed meet previously defined threshold conditions, respectively, and activates a passenger protector such as a curtain airbag, seatbelt pretensioner, active rollover, etc., if the vehicle rollover is determined (reference to JP-A-2004-42846).

By the way, in the above passenger protection apparatus, a rollover angular speed of a vehicle is detected by an angular speed sensor provided in the vehicle, and the rollover angular speed detected by the angular speed sensor is integrated so as to obtain a rollover angle of the vehicle.

However, if an error (zero-point drift) was observed in an initial setting value during setting the initial value of the angular speed sensor, the rollover angular speed of the vehicle is constantly detected, and the rollover angular speed is always integrated. Thereby, the rollover angle was accumulated.

In this case, it could not determine whether the rollover angular speed of the vehicle to be constantly detected was detected by the error observed during setting the initial setting value of the angular speed sensor or was detected by the vehicle rollover.

Therefore, the accumulated rollover angle met the threshold condition, and the occurrence of the vehicle rollover was determined regardless of the error during setting the initial setting value of the angular speed sensor, resulting in the miss-operation of the passenger protector.
It is an objective of the present invention to provide a passenger protection apparatus as indicated above, wherein a sensor error can be reliably detected in a simple manner.
According to the present invention, said objective is solved by a passenger protection apparatus having the features of independent claim 1. Preferred embodiments are laid down in the dependent claims.

Accordingly, it is provided a passenger protection apparatus capable of improving determination accuracy whether or not vehicle rollover occurs and preventing a miss-operation of a passenger protector.

Accordingly, it is provided a passenger protection apparatus according to a first aspect of the present teaching which comprises a rollover angular speed detection device, which detects a rollover angular speed during vehicle rollover; a rollover determination device, which conducts a determination of the vehicle rollover based on the rollover angular speed detected by the rollover angular speed detection device and a rollover angle obtained from the rollover angular speed; a passenger protector, which operates in accordance with a determination result of the rollover determination device to protect a passenger; a vertical G sensor, which detects an acceleration of an up and down direction of the vehicle; a horizontal G sensor, which detects an acceleration of a right and left direction of the vehicle; and an angular speed sensor error determination device, which conducts a determination whether or not a zero-point drift of the rollover angular speed detection device occurs based on a detected signal of the vertical G sensor or the horizontal G sensor.

According to the first aspect of the present teaching, even if the rollover angular speed detection device detects the rollover angular speed of the vehicle, it can be determined that the vehicle rollover does not occur from the detected signal of the vertical G sensor or the horizontal G sensor.

Therefore, it can be determined whether or not the zero-point drift of the rollover angular speed detection device is observed in a state that the vehicle rollover does not occur, and it can be absolutely detected whether or not the zero-point drift of the rollover angular speed detection device is observed. Accordingly, the determination accuracy whether or not vehicle rollover occurs can be improved.

In addition, if it is detected that the zero-point drift of the rollover angular speed detection device is observed, the miss-operation of the passenger protector can be absolutely prevented by prohibiting the operation of the passenger protector.

Accordingly, it is provided a passenger protection apparatus according to a second aspect of the present teaching which comprises a rollover angular speed detection device, which detects a rollover angular speed during vehicle rollover; a rollover determination device, which conducts a determination of the vehicle rollover based on the rollover angular speed detected by the rollover angular speed detection device and a rollover angle obtained from the rollover angular speed; a passenger protector, which operates in accordance with a determination result of the rollover determination device to protect a passenger; a vertical G sensor, which detects an acceleration of an up and down direction of the vehicle; a horizontal G sensor, which detects an acceleration of a right and left direction of the vehicle; and an angular speed sensor error determination device, which conducts a determination whether or not a zero-point drift of the rollover angular speed detection device occurs based on detected signals of the vertical G sensor and the horizontal G sensor.

According to the second aspect of the present teaching, even if the rollover angular speed detection device detects the rollover angular speed of the vehicle, it can be determined that the vehicle rollover does not occur from both of the detected signals of the vertical G sensor and the horizontal G sensor. Therefore, the determination accuracy can be further improved when determining whether or not the vehicle rollover occurs.

Accordingly, it is provided a passenger protection apparatus according to a third aspect of the present teaching which comprises a rollover angular speed detection device, which detects a rollover angular speed during vehicle rollover; a rollover determination device, which conducts a determination of the vehicle rollover based on the rollover angular speed detected by the rollover angular speed detection device and a rollover angle obtained from the rollover angular speed; a passenger protector, which operates in accordance with a determination result of the rollover determination device to protect a passenger; a vertical G sensor, which detects an acceleration of an up and down direction of the vehicle; a horizontal G sensor, which detects an acceleration of a right and left direction of the vehicle; and a G sensor error determination device, which conducts a determination whether or not a zero-point drift of the vertical G sensor or the horizontal G sensor occurs based on a detected signal of the rollover angular speed detection device.

According to the third aspect of the present teaching, the zero-point drift of the vertical G sensor or the horizontal G sensor can be certainly detected. Therefore, even if the determination of the vehicle rollover is conducted by using the vertical G sensor and the horizontal G sensor, the determination accuracy whether or not the vehicle rollover occurs can be improved and the miss-operation of the passenger protector can be prevented.

According to the present invention, it is possible to provide the passenger protection apparatus capable of improving the determination accuracy whether or not the vehicle rollover occurs, and preventing the miss-operation of the passenger protector.
Hereinafter, the present invention is illustrated and explained by means of preferred embodiments in conjunction with the accompanying drawings. In the drawings wherein:
FIG. 1 is a block diagram illustrating an entire passenger protection apparatus of a first embodiment of the present teaching.
FIG. 2 is a block diagram illustrating an entire passenger protection apparatus of a second embodiment of the present teaching.
FIG. 3 is a block diagram illustrating an entire passenger protection apparatus of a third embodiment of the present teaching.

Hereinafter embodiments of a passenger protection apparatus according to the present teaching will be described with reference to the accompanying drawings.

### First Embodiment

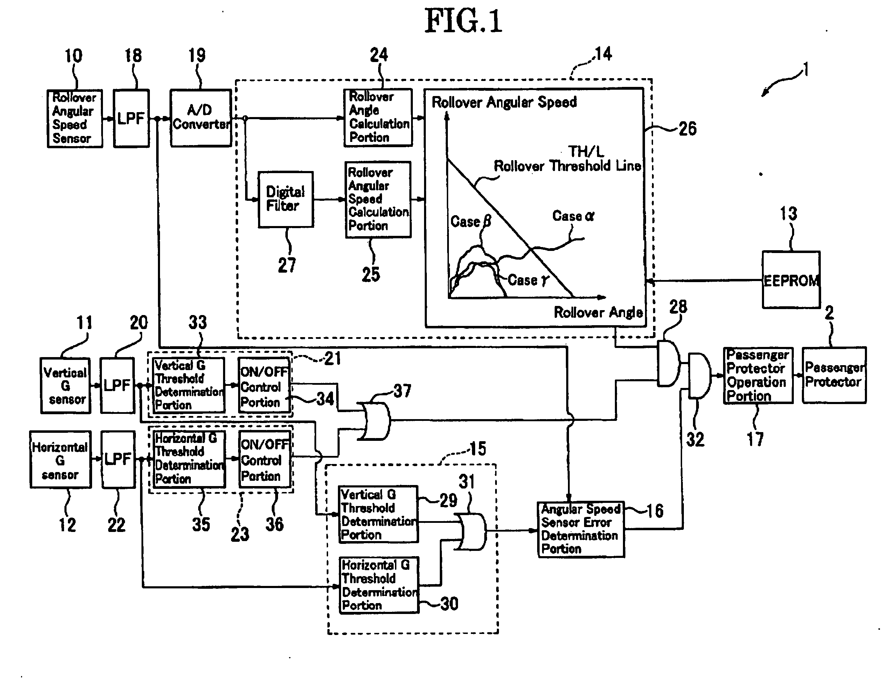

FIG. 1 illustrates an entire structure of a first embodiment of a passenger protection apparatus according to the present invention.

A passenger protection apparatus 1 comprises a passenger protector 2 such as a curtain airbag, seatbelt pretensioner, and active roll bar. The passenger protection apparatus 1 determines whether or not a vehicle rolls over, and protects a passenger from an impact to be occurred during vehicle rollover by appropriately activating the vehicle protector 2 if it is determined the vehicle rolls over.

As shown in FIG. 1, the vehicle protection apparatus 1 comprises a rollover angular speed sensor (rollover angular speed detection device) 10, a vertical G sensor 11, a horizontal G sensor 12, an EEPROM 13, a rollover determination module 14, a vehicle impact roll determination module (rollover determination device) 15, an angular speed sensor error determination portion (angular speed sensor error determination device) 16, a passenger protector operation portion (protector control device) 17 and the like.

The rollover angular speed sensor 10 detects an angular speed (rollover angular speed) of vehicle rollover (rotation) centering on an axis line (X axis), which runs through a weighted center of vehicle, and extends in the backward and forward direction of the vehicle. An angular speed signal of an output signal from the rollover angular speed sensor 10 is filtered by a high frequency noise elimination filter (LPF: Low Pass Filter) 18, and then input to an angular speed sensor error determination portion 16 and also to the rollover determination module 14 after converted by an A/D converter 19.

The vertical G sensor 11 detects acceleration (vertical G) of the up and down direction of the vehicle. A vertical G signal of an output signal from the vertical G sensor 11 is filtered by a high frequency noise elimination filter (LPF: Low Pass Filter) 20, and then is input to the vehicle impact roll determination module 15 and the after-motioned vertical G determination module 21.

The horizontal G sensor 12 detects acceleration (horizontal G) of the right and left direction of the vehicle (width direction). A horizontal G signal of an output signal from this horizontal G sensor 12 is filtered by a high frequency noise elimination filter (LPF: Low Pass Filter) 22, and then is input to the vehicle impact roll determination module 15 and the after-mentioned horizontal G determination module 23.

The EEPROM 13 previously stores parameters of a vehicle structure such as a weighted center position of vehicle, a weighted center height of vehicle, a distance from a contact patch of wheel to a weighted center position, a tread width, a vehicle weight, and acceleration gravity (9.8 m /sec²). The vehicle structure parameters stored in the EEPROM 13 are input to the rollover determination module 14.

The rollover determination module 14 determines whether a vehicle rolls over or not based on an angular speed signal. The rollover determination module 14 comprises a rollover angle calculation portion 24, a rollover angular speed calculation portion 25 and a vehicle rollover determination portion 26.

The rollover angle calculation portion 24 obtains a rollover angle of a vehicle by integrating an angular speed signal to be obtained from the rollover angular speed sensor 10. An angle signal of an output signal from the rollover angle calculation portion 24 is input to the vehicle rollover determination portion 26.

The rollover angular speed calculation portion 25 obtains a rollover angular speed of a vehicle by adding a previously set initial setting value to an sngular-speed signal input through a digital filter 27, which eliminates noise. An angular speed signal for determination of an output signal from the rollover angular speed calculation portion 25 is input to the vehicle rollover determination portion 26.

The vehicle rollover determination portion 26 determines whether or not there is a possibility of vehicle rollover. A rollover determination signal of an output signal from the vehicle rollover determination portion 26 is input to the after-mentioned AND circuit 28.

The vehicle rollover determination portion 26 previously sets a rollover threshold line TH/L based on the angle signal to be obtained from the rollover angle calculation portion 24, the angular speed signal for determination to be obtained from the rollover angular speed calculation portion 25, and the vehicle structure parameters stored in the EEPROM 13.

In addition, a setting method of the rollover threshold line TH/L is well known whereby the explanation will be omitted.

The vehicle rollover determination portion 26 compares the rollover threshold line TH/L and an actual rollover angular speed of the vehicle to determine whether or not there is a possibility of vehicle rollover. In this case, it is determined that there is a possibility of the vehicle rollover if the actual rollover angular speed of the vehicle exceeds the rollover threshold line TH/L (Case α), and it is determined that there is no possibility of the vehicle rollover if the actual rollover angular speed does not exceed the rollover threshold line TH/L (Case 6, Case γ).

The vehicle impact roll determination module 15 determines whether or not an impact and a roll phenomenon (vehicle rollover) to a vehicle occur from the vertical G signal or horizontal G signal. The vehicle impact roll determination module 15 comprises a vertical G threshold determination portion 29, a horizontal G threshold determination portion 30 and an OR circuit 31.

The vertical G threshold determination portion 29 determines whether or not the vertical G signal to be obtained form the vertical G sensor 11 is within a range of a previously set predetermined threshold. In this case, this vertical G threshold determination portion 29 outputs an ON signal if the vertical G signal is within the range of the predetermined threshold, and outputs an OFF signal if the vertical G signal is beyond the range of the predetermined threshold.

The horizontal G threshold determination portion 30 determines whether or not the horizontal G signal to be obtained from the horizontal G sensor 12 is within a range of a previously set predetermined threshold. In this case, the horizontal G threshold determination portion 30 outputs an ON signal of the horizontal G signal is within the range of the predetermined threshold, and outputs an OFF signal if the horizontal G signal is beyond the range of the predetermined threshold.

The OR circuit 31 determines whether or not an OR signal is input from at least one of the vertical G threshold determination portion 29 and the horizontal G threshold determination portion 30 (whether or not an OR condition of the vertical G threshold determination portion 29 and the horizontal G threshold determination portion 30 is achieved).

This OR circuit 31 outputs a first rollover status signal indicating vehicle rollover and an impact to a vehicle do not occur if the OR condition is achieved, and outputs a first rollover status signal indicating vehicle rollover and an impact to a vehicle occur, if the OR condition is not achieved. Then, the first rollover status signal is input to the angular speed sensor error determination portion 16.

The angular speed sensor error determination portion 16 determines whether or not the zero-point drift of the rollover angular speed sensor 10 occurs based on the angular speed signal input from the rollover angular speed sensor 10 and the first rollover status signal input from the vehicle impact roll determination module 15.

An error status signal of an output signal from the angular speed sensor error determination portion 16 is input to the passenger protector operation portion 17-through the after-mentioned AND circuit 32.

The vertical G determination module 21 determines whether or not the vertical G signal to be obtained from the vertical G sensor 11 is within a range of a previously set predetermined threshold. The vertical G determination module 21 comprises a vertical G threshold determination portion 33 and an ON/OFF control portion 34.

The vertical G threshold determination portion 33 compares the vertical G signal to be obtained from the vertical G sensor 11 and the previously set predetermined threshold. If the vertical G signal exceeds the range of the predetermined threshold value, the ON/OFF control portion 34 outputs an ON signal.

The horizontal G determination module 23 determines whether or not the horizontal G signal to be obtained from the horizontal G sensor 12 is within a range of a previously set predetermined threshold. The horizontal G determination module 23 comprises a horizontal G threshold determination portion 35 and an ON/OFF control portion 36.

The horizontal G threshold determination portion 35 compares the horizontal G signal to be obtained from the horizontal G sensor 12 and the previously set predetermined threshold. The ON/OFF control portion 36 outputs an ON signal if the horizontal G signal exceeds the range of the predetermined threshold.

The ON signals output from the ON/OFF control portions 34, 36 are input to the OR circuit 37.

The OR circuit 37 determines whether or not the ON signal is input from at least one of the ON/OFF control portion 34 and the ON/OFF control portion 36 (whether or not the OR condition of the ON/OFF control portion 34 and the ON/OFF control portion 36 is achieved).

The OR circuit 37 outputs a second rollover status signal indicating that vehicle rollover and an impact to a vehicle occur, if the OR condition is achieved, and outputs a second rollover status signal indicating that vehicle rollover and an impact to a vehicle do not occur, if the OR condition is not achieved. The second rollover status signal is input to the AND circuit 28.

A rollover determination signal indicating the possibility of vehicle rollover is input to the AND circuit 28 from the vehicle roll over determination portion 26. The AND circuit 28 determines whether or not the second rollover status signal indicating vehicle rollover and impact is input from the OR circuit 37 (whether or not the AND condition of the vehicle rollover determination portion 26 and the OR circuit 37 is achieved).

The AND circuit 28 outputs a third rollover status signal indicating that vehicle rollover and an impact to a vehicle occur, if the AND condition is achieved, and outputs a third rollover status signal indicating that vehicle rollover and an impact to a vehicle do not occur, if the AND condition is not achieved. Then, the third rollover status signal is input to the AND circuit 32.

The third rollover status signal indicating vehicle rollover and impact is input to the AND circuit 32 from the AND circuit 28. The AND circuit 32 determines whether or not an error status signal indicating the zero-point drift of the rollover angular speed sensor 10 is input from the angular speed sensor error determination portion 16 (whether or not the AND condition of the AND circuit 28 and the angular speed sensor error determination portion 16 is achieved).

The AND circuit 32 outputs a non-operation signal to the passenger detector operation portion 17 if the AND condition is achieved, and outputs an operation signal to the passenger protector operation portion 17 if the AND condition is not achieved.

If the third rollover status signal indicating that vehicle rollover and impact do not occur is input to the AND circuit 32 from the AND circuit 28, the AND circuit 32 outputs the non-operation signal to the passenger protector operation portion 17 regardless of whether or not the error status signal indicating the zero-point drift of the rollover angular speed sensor 10 is input.

The passenger detector operation portion 17 appropriately activates a passenger protector, which is disposed in an appropriate position, in the passenger protectors 2 disposed in the vehicle, if the operation signal is input from the AND circuit 32

Next, a function of the passenger protection apparatus 1 according to the present teaching will be described.

In the passenger protection apparatus 1, in order to determine whether or not the zero-point drift of the rollover angular speed sensor 10 is observed, at first, the rollover angular speed sensor 10 detects an angular speed of vehicle rollover, the vertical G sensor 11 detects an acceleration (vertical G) of the up and down direction of the vehicle, and the horizontal G sensor 12 detects an acceleration (horizontal G) of the right and left direction of the vehicle.

In this case, the vertical G signal detected by the vertical G sensor 11 and the horizontal G signal detected by the horizontal G sensor 12 are input to the vehicle impact roll determination module 15.

This vehicle impact roll determination module 15 determines whether or not the vehicle rollover occurs based on the input vertical G signal and the horizontal G signal.

In this case, if at least one of the vertical G signal and the horizontal G signal is within a previously set predetermined threshold, the vehicle impact roll determination module 15 determines that the vehicle rollover and the impact to the vehicle do not occur, and outputs the first rollover status signal indicating that vehicle rollover and impact do not occur.

On the other hand, if both of the vertical G signal and the horizontal G signal are beyond the previously set predetermined threshold, the vehicle impact roll determination module 15 determines that the vehicle rollover and the impact to the vehicle occur, and outputs the first rollover status signal_ indicating vehicle rollover and impact.

If the first rollover status signal indicating that vehicle rollover and impact do not occur is input to the angular speed sensor error determination portion 16 from the vehicle impact roll determination module 15, the angular speed sensor error determination portion 16 determines whether or not the zero-point drift of the rollover angular speed sensor 10 is observed.

In order to determines whether or not the zero-point drift of the rollover angular speed sensor 10 is observed by the angular speed sensor error determination portion 16, the angular speed sensor error determination portion 16 compares the previously set error determination threshold and the angular speed signal input from the rollover angular speed sensor 10.

The angular speed sensor error determination portion 16 determines that the zero point drift of the rollover angular speed sensor 10 is observed, if the angular speed signal input from the rollover angular speed sensor 10 is larger than the previously set error determination threshold.

In addition, this angular speed sensor error determination portion 16 determines that the initial setting value of the rollover angular speed sensor 10 is normal, if the angular speed signal input from the rollover angular speed sensor 10 is smaller than the previously set error determination threshold.

If the first rollover status signal indicating that vehicle rollover and impact do not occur is input from the vehicle impact roll determination module 15, more particularly, if it is determined that the vehicle rollover does not occur, the angular speed sensor error determination portion 16 may sufficiently narrow an allowable range of error determination threshold. If the first rollover status signal indicating vehicle rollover and impact is input from the vehicle impact roll determination module 15, more particularly, if it is determined that the vehicle rollover occurs, the allowance range of the error determination threshold may sufficiently expand.

As stated above, it can be determined whether or not the zero-point drift of the rollover angular speed sensor 10 is observed in a state that the vehicle rollover and the impact to the vehicle do not occur. Therefore, the determination whether or not the error of the rollover angular speed sensor 10 is observed can be accurately detected.

Moreover, it is determined that the zero-point drift of the rollover angular speed sensor 10 is observed, the non-operation signal is output to the passenger protector operation portion 17 from the AND circuit 32, and the passenger protector operation portion 17 is controlled. Accordingly, the miss-operation can be prevented by stopping the operation of the passenger protector 2.

In addition, the zero-point drift of the rollover angular speed sensor 10 may be informed to a passenger as a system trouble of the passenger protection apparatus 1. The system trouble of the passenger protection apparatus 1 is thereby immediately identified, and the reliability can be improved.

As described above, the passenger protection apparatus 1 according to the present teaching comprises the rollover angular speed sensor 10 of the rollover angular speed detection device, which detects a rollover angular speed during vehicle rollover, the rollover determination module 14 of the rollover determination device, which conducts the determination of the vehicle rollover based on the rollover angular speed detected by the rollover angular speed sensor 1 and the rollover angle obtained from the rollover angular speed, the passenger protector 2, which operates in accordance with the determination result of the rollover determination module 14 to protect a passenger, the vertical G sensor 11, which detects an acceleration of the up and down direction of the vehicle, the horizontal G sensor 12, which detects an acceleration of the right and left direction of the vehicle, and the angular speed sensor error determination portion 16 of the angular speed sensor error determination device, which conducts the determination whether or not the zero-point drift of the rollover angular speed sensor 10 is observed, based on the detected signal of the vertical G sensor 11 or the horizontal G sensor 12.

Accordingly, if the rollover angular speed sensor 10 detects a vehicle rollover angular speed, it can be determined that the vehicle rollover does not occur based on the detected signal of the vertical G sensor 11 or the horizontal G sensor.

Therefore, it can be determined whether or not the zero-point drift of the rollover angular speed sensor 10 occurs in a state that the vehicle rollover phenomenon does not occur, and the zero-point drift of the rollover angular speed sensor 10 can be absolutely detected. Accordingly, the determination accuracy whether or not the vehicle rollover occurs can be improved.

If it is detected that the zero-point drift of the rollover angular speed sensor 10 occurs, the miss-operation of the passenger protector 2 can be absolutely prevented by prohibiting the operation of the passenger protector 2.

In the above passenger protection apparatus 1, the vehicle impact roll determination module 15 comprises the OR circuit 31. It is determined that the vehicle rollover does not occur if the ON signal is input from the vertical G threshold determination portion 29 or the horizontal G threshold determination portion 30. However, the OR circuit 31 can be an AND circuit (not shown).

In this case, if the ON signal is input from both of the vertical G threshold determination portion 29 and the horizontal G threshold determination portion 30, more particularly, if the vertical G signal and the horizontal G signal are within the range of the predetermined threshold, it is determined the vehicle rollover does not occur.

Accordingly, the determination accuracy, which determines whether or not the vehicle rollover occurs, can be further improved.

### Second Embodiment

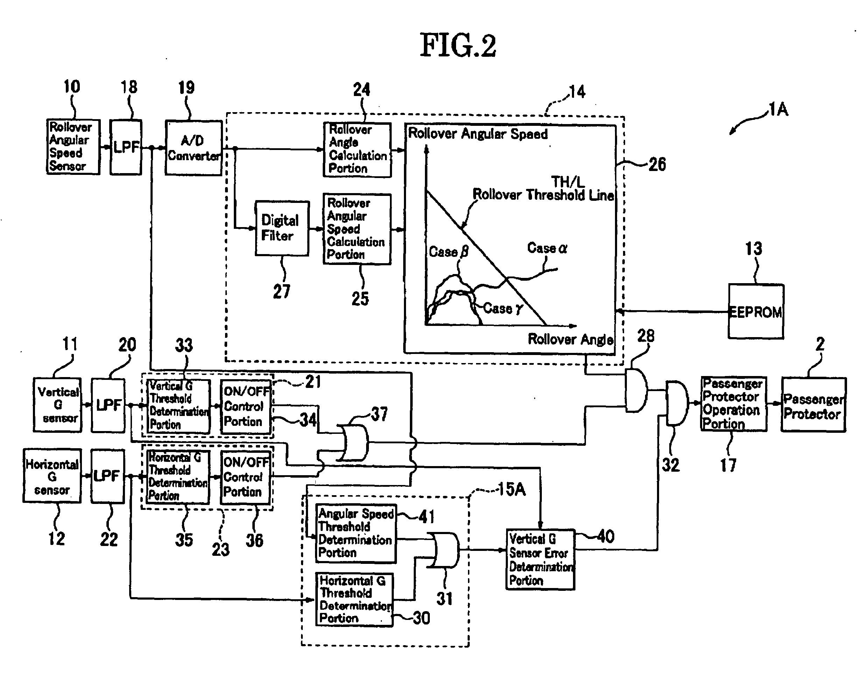

FIG. 2 illustrates an entire structure of a second embodiment of a passenger protection apparatus according to the present teaching.

In addition, the same reference numbers are used in the portions equivalent of the portions in the first embodiment; thus, the detailed explanations will be omitted.

A passenger protection apparatus 1A comprises the rollover angular speed sensor 10, the vertical G sensor 11, the horizontal G sensor 12, a vehicle impact roll determination module 15A, a vertical G sensor error determination portion (G sensor error detection device) 40 and the like, as shown in FIG. 2.

The vehicle impact roll determination module 15A is configured to determine whether or not vehicle rollover occurs from an angular speed signal or a horizontal G signal. The vehicle impact roll determination module 15A comprises an angular speed threshold determination portion 41, horizontal G threshold determination portion 30, and OR circuit 31.

The angular speed threshold determination portion 41 determines whether or not the angular speed signal to be obtained from the rollover angular speed sensor 10 is within a previously set predetermined threshold. This angular speed threshold determination portion 41 outputs an ON signal if the angular speed signal is within the predetermined threshold range.

If it is determined that the OR condition of the angular speed threshold determination portion 41 and the horizontal G threshold determination portion 30 is achieved by the OR circuit 31, the first rollover status signal indicating that vehicle rollover and impact do not occur is output from the vehicle impact roll determination module 15A.

Moreover, if the first rollover status signal indicating that vehicle rollover and impact do not occur is input from the vehicle impact roll determination module 15A, the vertical G sensor error determination portion 40 determines whether or not the zero-point drift of the vertical G sensor 11 occurs based on the vertical G signal input from the vertical G sensor 11.

In order to determine whether or not the zero-point drift of the vertical G sensor 11 occurs by this vertical G sensor error determination portion 40, this vertical G sensor error determination portion 40 compares the previously set error determination threshold and the vertical G signal input from the vertical G sensor 11.

The vertical G sensor error determination portion 40 determines that the zero-point drift of the vertical G sensor 11 occurs if the vertical G signal input from the vertical G sensor 11 is larger than the previously set error determination threshold.

In addition, the vertical G sensor error determination portion 40 determines that the initial setting value of the vertical G sensor 11 is normal if the angular speed signal input from the vertical G sensor 11 is smaller than the previously set error determination threshold.

As described above, since the passenger protection apparatus 1A comprises the vertical G sensor error determination portion 40, which determines whether or not the zero-point drift of the vertical sensor 11 occurs based on the angular speed signal of the detected signal of the rollover angular speed sensor 10 in a state that the vehicle rollover does not occur, the zero-point drift of the vertical G sensor 11 can be absolutely detected.

Accordingly, even if the vehicle rollover is determined by using the vertical G sensor 11, the vehicle rollover can be certainly determined. Therefore, the determination accuracy whether or not the vehicle rollover occurs can be improved, and also the miss-operation of the passenger protector 2 can be prevented.

In addition, the vertical G sensor error determination portion 40 absolutely accomplishes the error determination by sufficiently narrowing an allowance range of the error determination threshold, if the first rollover status signal indicating that vehicle rollover and impact do not occur is input from the vehicle impact roll determination module 15A, more particularly, if it is determined that the vehicle rollover do not occur. The vertical G sensor error determination portion 40 does not absolutely accomplish the error determination by sufficiently expanding the allowance range of the error determination threshold, if the first rollover status signal indicating vehicle rollover and impact is input from the vehicle impact roll determination module 15A, more particular, if it is determined that the vehicle rollover occurs.

### Third Embodiment

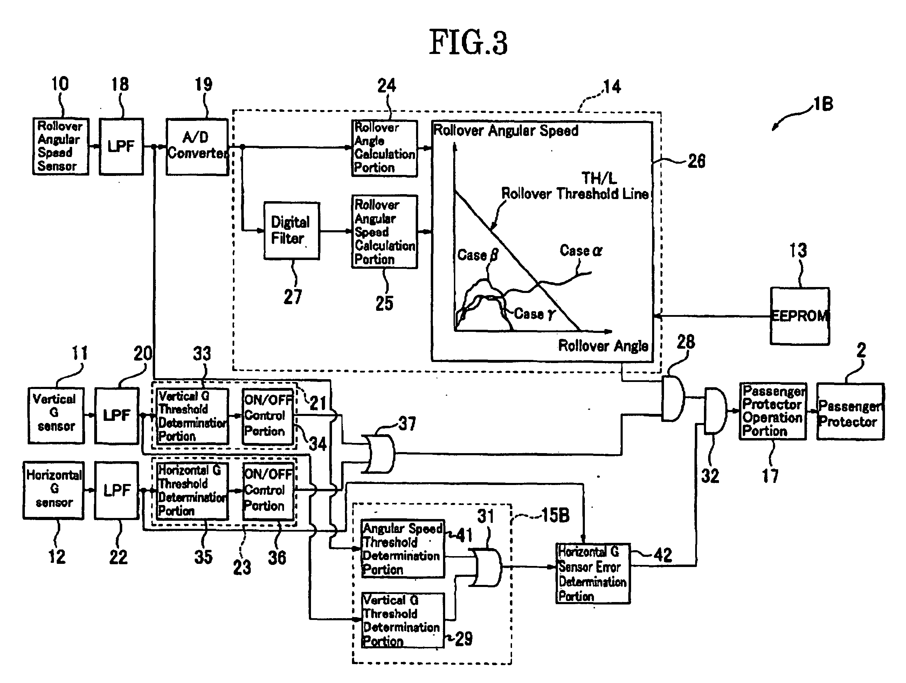

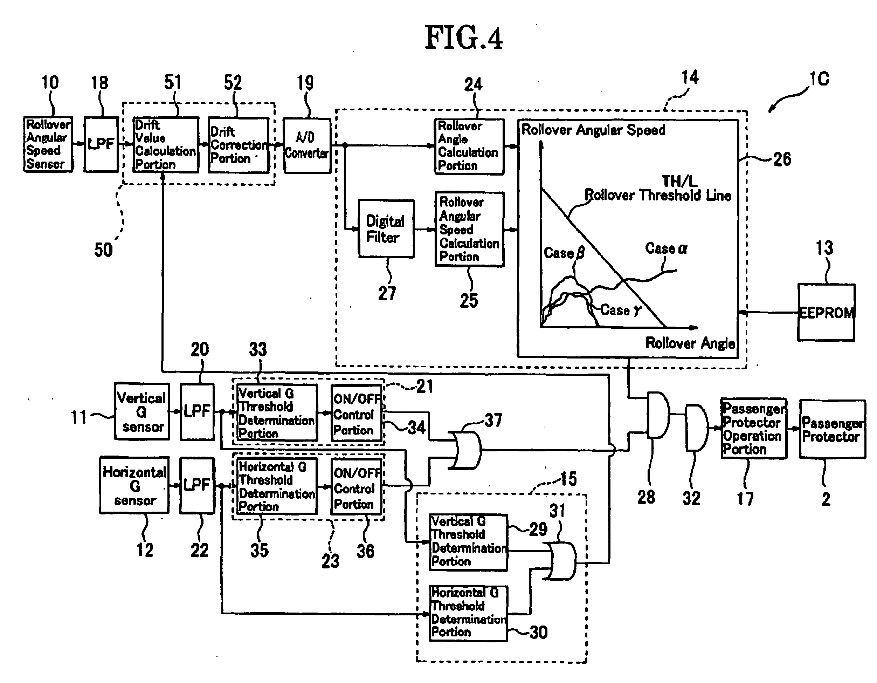

FIG. 3 illustrates an entire structure of a third embodiment of a passenger protection apparatus according to the present teaching.

In addition, the same reference numbers are used in the portions equivalent of the portions in the first embodiment and the second embodiment; thus, the detailed explanations will be omitted.

A passenger protection apparatus 1B comprises the rollover angular speed sensor 10, the vertical G sensor 11, the horizontal G sensor 12, a vehicle impact roll determination module 15B, the horizontal G sensor error determination portion (G sensor error determination device) 42 and the like, as shown in FIG. 3.

The vehicle impact roll determination module 15B determines whether or not vehicle rollover occurs from an angular speed signal or a vertical G signal. The vehicle impact roll determination module 15B comprises the angular speed threshold determination portion 41, vertical G threshold determination portion 29, and OR circuit 31.

If it is determined that the OR condition of the angular speed threshold determination portion 41 and the vertical G threshold determination portion 29 is achieved by the OR circuit 31, the first rollover status signal indicating that vehicle rollover and impact do not occur is output from the vehicle impact roll determination module 15B by the OR circuit 31.

In addition, if the first rollover status signal indicating that vehicle rollover and impact do not occur is input from the vehicle impact roll determination module 15B, the horizontal G sensor error determination portion 42 determines whether-or not the zero-point drift of the horizontal G sensor 12 occurs based on the horizontal G signal input from the horizontal G sensor 12.

In order to determine whether or not the zero-point drift of the horizontal G sensor 12 occurs, the horizontal G sensor error determination portion 42 compares a previously set error determination threshold value and the horizontal G signal input from the horizontal G sensor 12.

The horizontal G sensor error determination portion 42 determines that the zero-point drift of the horizontal G sensor 12 occurs, if the horizontal G signal input from the horizontal G sensor 12 is larger than the previously set error determination threshold value.

The horizontal G sensor error determination portion 42 also determines that the initial setting value of the horizontal G sensor 12 is normal, if the angular speed signal input from the horizontal G sensor is smaller than the previously set error determination threshold.

As described above, since the passenger protection apparatus 1B comprises the horizontal G sensor error determination portion 42, which performs the determination whether or not the zero-point drift of the horizontal G sensor 12 occurs based on the angular speed signal of the detected signal of the rollover angular speed sensor 10 in a state that the vehicle rollover does not occur, the zero-point drift of the horizontal G sensor 12 can be certainly detected.

Accordingly, even if the vehicle rollover is determined by using the horizontal G sensor 12, the vehicle rollover can be absolutely determined. Therefore, the determination accuracy whether or not vehicle rollover occurs can be improved, and also the miss-operation of the passenger protector 2 can be prevented.

In addition, the horizontal G sensor error determination portion 42, may absolutely accomplish the error determination by sufficiently narrowing an allowance range of the error determination threshold, if the first rollover status signal indicating that vehicle rollover and impact do not occur is input from the vehicle impact roll determination module 15B, more particular, if it is determined that vehicle rollover does not occur. The horizontal G sensor error determination portion 42 may not absolutely accomplishes the error determination by sufficiently expanding the allowance range of the error determination threshold value if the first rollover status signal indicating vehicle rollover and impact is input from the vehicle impact roll determination module 15B, more particularly, it is determined that vehicle rollover occurs.

## Claims

1. A passenger protection apparatus (1) including a rollover angular speed detection device (10), which detects a rollover angular speed during vehicle rollover, a rollover determination device (14), which conducts a determination of the vehicle rollover based on the rollover angular speed detected by the rollover angular speed detection device (10) and a rollover angle obtained from the rollover angular speed, and a passenger protector (2), which operates in accordance with a determination result of the rollover determination device (14) to protect a passenger, further comprising:
a vertical G sensor (11), which detects an acceleration of an up and down direction of the vehicle;
a horizontal G sensor (12), which detects an acceleration of a right and left direction of the vehicle; **characterized in that**
an angular speed sensor error determination device (16) determines whether or not a zero-point drift of the rollover angular speed device (10) is observed by comparing a previously set error determination threshold, based on a detected signal of the vertical G sensor (11) and/or the horizontal G sensor (12), and said rollover angular speed from the rollover angular speed device (10).

2. A passenger protection apparatus (1A) including a rollover angular speed detection device (10), which detects a rollover angular speed during vehicle rollover, a rollover determination device (14), which conducts a determination of the vehicle rollover based on the rollover angular speed detected by the rollover angular speed detection device (10) and a rollover angle obtained from the rollover angular speed, and a passenger protector (2), which operates in accordance with a determination result of the rollover determination device (14) to protect a passenger, further comprising:
a vertical G sensor (11), which detects an acceleration of an up and down direction of the vehicle;
a horizontal G sensor (12), which detects an acceleration of a right and left direction of the vehicle; **characterized in that**,
a G sensor error determination device (40), determines whether or not the zero- point drift of the vertical G sensor (11) or the horizontal G sensor occurs by comparing a previously set error determination threshold, based on a detected signal of the rollover angular speed detection device (10) , and a vertical G signal input from said vertical G sensor (11) or an horizontal G signal input from said horizontal G sensor (12).

## Patentansprüche

1. Insassenschutzvorrichtung (1), enthaltend eine Überschlagswinkelgeschwindigkeits- Erfassungsvorrichtung (10), die eine Überschlagswinkelgeschwindigkeit während eines Fahrzeugüberschlags erfasst, eine Überschlagsfeststellungsvorrichtung (14), die eine Feststellung des Fahrzeugüberschlags auf der Grundlage der Überschlagswinkelgeschwindigkeit, erfasst durch die Überschlagswinkelgeschwindigkeits- Erfassungsvorrichtung (10) und einem Überschlagswinkel, erhalten aus der Überschlagswinkelgeschwindigkeit, ausführt, und einen Insassenschutz (2), der in Übereinstimmung mit einem Feststellungsergebnis der Überschlagsfeststellungsvorrichtung (14) arbeitet, um einen Insassen zu schützen, außerdem aufweisend:
einen vertikalen G- Sensor (11), der eine Beschleunigung einer Aufwärts- und Abwärts- Richtung des Fahrzeuges erfasst;
einen horizontalen G- Sensor (12), der eine Beschleunigung einer rechten und linken Richtung des Fahrzeuges erfasst, **dadurch gekennzeichnet, dass**
eine Winkelgeschwindigkeitssensorfehler- Bestimmungsvorrichtung (16) bestimmt, ob eine Nullpunktdrift der Überschlagswinkelgeschwindigkeits- Erfassungsvorrichtung (10) beobachtet wird, durch Vergleich eines zuvor festgelegten Fehlerbestimmungsgrenzwertes, basierend auf einem erfassten Signal des vertikalen G- Sensors (11) und / oder des horizontalen G- Sensors (12), und der Überschlagswinkelgeschwindigkeit aus der Überschlagswinkelgeschwindigkeits-Erfassungsvorrichtung (10), oder nicht.

2. Insassenschutzvorrichtung (1A), enthaltend eine Überschlagswinkelgeschwindigkeits- Erfassungsvorrichtung (10), die eine Überschlagswinkelgeschwindigkeit während eines Fahrzeugüberschlags erfasst, eine Überschlagsfeststellungsvorrichtung (14), die eine Feststellung des Fahrzeugüberschlags auf der Grundlage der Überschlagswinkelgeschwindigkeit, erfasst durch die Überschlagswinkelgeschwindigkeits- Erfassungsvorrichtung (10) und eines Überschlagwinkels, erhalten aus der Überschlags- Wnkelgeschwindigkeit, ausführt und einen Insassenschutz (2), der in Übereinstimmung mit einem Feststellungsergebnis der Überschlagsfeststellungsvorrichtung (14) arbeitet, um einen Insassen zu schützen, außerdem aufweisend:
einen vertikalen G- Sensor (11), der eine Beschleunigung einer Aufwärts- und Abwärts- Richtung des Fahrzeuges erfasst;
einen horizontalen G- Sensor (12), der eine Beschleunigung einer rechten und linken Richtung des Fahrzeuges erfasst, **dadurch gekennzeichnet, dass**
eine G- Sensorfehlerfeststellungsvorrichtung (40) feststellt, ob der Nullpunktdrift des vertikalen G- Sensors (11) oder des horizontalen G- Sensors (12) auftritt, durch Vergleichen eines vorher festgelegten Fehlerbestimmungs- Grenzwertes auf der Grundlage eines erfassten Signales der Überschlagswinkelgeschwindigkeits- Erfassungsvorrichtung (10) und einer vertikalen G- Signaleingabe von dem vertikalen G- Sensor (11) oder einer horizontalen G- Signaleingabe von dem horizontalen G- Sensor (12), oder nicht.

## Revendications

1. Appareil de protection d'un passager (1) comprenant un dispositif de détection de vitesse angulaire de renversement (10), qui détecte une vitesse angulaire de renversement pendant le renversement d'un véhicule, un dispositif de détermination de renversement (14), qui opère une détermination du renversement du véhicule sur la base de la vitesse angulaire de renversement détectée par le dispositif de détection de vitesse angulaire de renversement (10) et d'un angle de renversement obtenu à partir de la vitesse angulaire de renversement, et un dispositif de protection de passager (2), qui fonctionne selon un résultat de détermination du dispositif de détermination de renversement (14) pour protéger un passager, comprenant en outre :
un capteur d'accélération verticale (11), qui détecte une accélération d'une direction vers le haut et vers le bas du véhicule ;
un capteur d'accélération horizontale (12), qui détecte une accélération d'une direction vers la droite et vers la gauche du véhicule ; **caractérisé en ce que**
un dispositif de détermination d'erreur de capteur de vitesse angulaire (16) détermine si une dérive du point zéro du dispositif de vitesse angulaire de renversement (10) est observée ou non en comparant un seuil de détermination d'erreur précédemment défini, sur la base d'un signal détecté du capteur d'accélération verticale (11) et/ou du capteur d'accélération horizontale (12), et ladite vitesse angulaire de renversement provenant du dispositif de vitesse angulaire de renversement (10).

2. Appareil de protection d'un passager (1A) comprenant un dispositif de détection de vitesse angulaire de renversement (10), qui détecte une vitesse angulaire de renversement pendant le renversement d'un véhicule, un dispositif de détermination de renversement (14), qui opère une détermination du renversement du véhicule sur la base de la vitesse angulaire de renversement détectée par le dispositif de détection de vitesse angulaire de renversement (10) et un angle de renversement obtenu à partir de la vitesse angulaire de renversement, et un dispositif de protection de passager (2), qui fonctionne conformément à un résultat de détermination du dispositif de détermination de renversement (14) pour protéger un passager, comprenant en outre :
un capteur d'accélération verticale (11), qui détecte une accélération d'une direction vers le haut et vers le bas du véhicule ;
un capteur d'accélération horizontale (12), qui détecte une accélération d'une direction vers la droite et vers la gauche du véhicule ; **caractérisé en ce que**
un dispositif de détermination d'erreur de capteur d'accélération (40), détermine si une dérive du point zéro du capteur d'accélération verticale (11) ou du capteur d'accélération horizontale se produit ou non en comparant un seuil de détermination d'erreur précédemment défini, sur la base d'un signal détecté du dispositif de détection de vitesse angulaire de renversement (10), et une entrée de signal d'accélération verticale provenant dudit capteur d'accélération verticale (11) ou une entrée de signal d'accélération horizontale provenant dudit capteur d'accélération horizontale (12).
